# EUROPEAN PATENT APPLICATION

(11) **EP 4 496 076 A2**
(43) Date of publication of application: **22.01.2025**
(21) Application number: 24186883.5
(22) Date of filing: 05.07.2024
(51) Int. Cl.: H01M 10/613, H01M 10/647, H01M 10/653, H01M 10/6554, H01M 50/209

(54) **RECHARGEABLE BATTERY MODULE**

(30) Priority: 20.07.2023 KR 20230094888
(71) Applicant: SAMSUNG SDI CO., LTD., Giheung-gu Yongin-si, Gyeonggi-do 17084 (KR)
(72) Inventor: KIM, Young Deok, 17084 Yongin-si (KR)
(74) Representative: Marks & Clerk LLP

(57) **Abstract**

A rechargeable battery module includes: a plurality of battery cells stacked in a first direction; a pair of end plates located at opposite ends of the plurality of battery cells in the first direction; a pair of side plates at opposite sides of the plurality of battery cells in a second direction crossing the first direction to connect the pair of end plates to each other; a heat diffusion portion located between battery cells of the plurality of battery cells and having a first melting point; and a rigid/insulating portion embedded inside the heat diffusion portion to provide rigidity or insulation and having a second melting point lower than the first melting point.

## Description

### BACKGROUND

### 1. Field

The present disclosure relates to a rechargeable battery module, and more particularly, to a rechargeable battery module having heat dissipation performance and thermal propagation blocking performance.

### 2. Description of the Related Art

A rechargeable battery is a battery that may be repeatedly charged and discharged, unlike a primary battery. A small-capacity rechargeable battery may be used in a portable small electronic device, such as a mobile phone, a laptop computer, and a camcorder. A large-capacity and high-density rechargeable battery may be used for a power source or energy storage for driving a motor of a hybrid vehicle and an electric vehicle, for example.

The rechargeable battery may be used as a rechargeable battery module including a plurality of battery cells connected in series and/or in parallel to be able to drive a motor of a hybrid vehicle, as an example, that requires a relatively high energy density.

For example, the rechargeable battery module may be formed by stacking a plurality of battery cells provided in a number corresponding to a desired amount of power in a frame to realize a relatively high-power rechargeable battery module (for example, for use with an electric vehicle).

A module frame includes a side plate and an end plate. When the battery cell in the module expands due to chemical reactions caused by charging and discharging, the side plate holds the end plate to prevent or substantially prevent movement of the end plate, and holds the battery cells and internal components from being separated from the module. In this case, the side plate must maintain a limited space.

Battery cells are arranged in the module frame, and an insulation-cell for preventing or substantially preventing thermal propagation, insulating, and reinforcing module rigidity is used between the battery cells. The thermal propagation is determined by a time for the first battery cell to become an event and then the second battery cell to become an event. A double-sided tape or adhesive attached to the insulation-cell connects all of a plurality of battery cells, thereby reinforcing mechanical rigidity of the module.

In addition, a cooling plate is mounted on the bottom of the module to prevent or substantially prevent an allowable temperature (for example, 60 °C) of the battery cells from being exceeded during rapid charging, lifespan, and driving pattern of the battery cells of the module. The cooling plate suppresses an increase in temperature of the battery cell through a cooling temperature, a cooling flow amount, and cooling flow rate (velocity).

### SUMMARY

According to an aspect of one or more embodiments of the present disclosure, a rechargeable battery module having a heat dissipation effect on an entire outer surface of a battery cell (e.g., five surfaces excluding a lower surface of a battery cell provided with a cooling plate) to enable rapid charging of a high-capacity battery cell is provided.

According to another aspect of one or more embodiments of the present disclosure, a rechargeable battery module that may improve heat dissipation performance between battery cells and may have thermal propagation blocking performance between battery cells is provided.

According to one or more embodiments, a rechargeable battery module includes: a plurality of battery cells stacked in a first direction; a pair of end plates located at opposite ends of the plurality of battery cells in the first direction; a pair of side plates at opposite sides of the plurality of battery cells in a second direction crossing the first direction to connect the pair of end plates to each other; a heat diffusion portion located between battery cells of the plurality of battery cells and having a first melting point; and a rigid/insulating portion embedded inside the heat diffusion portion (e.g. to provide rigidity or insulation) and having a second melting point lower than the first melting point.

The rechargeable battery module may further include a cooling plate below the battery cells.

The heat diffusion portion may include a bottom diffusion portion at a bottom of the battery cells between the battery cells, and the bottom diffusion portion may be in contact with the cooling plate.

The rechargeable battery module may further include a bus bar on an upper side of the battery cells to electrically connect electrode terminals of the battery cells.

The heat diffusion portion may include an upper diffusion portion between the battery cells on the upper side of the battery cell excluding the electrode terminals, and the upper diffusion portion may be in contact with the bus bar.

The heat diffusion portion may be formed of silicon (Si) or liquid crystal polymer (LCP). The rigid/insulating portion may be formed of polypropylene (PP) or polycarbonate (PC).

The heat diffusion portion may exist in a solid state at room temperature, and may have a higher density in a liquid state than in a solid state and have a larger volume when solidified like water.

The battery cell may be configured to form a first temperature on a surface thereof in an event situation, the heat diffusion portion may have a melting point of a second temperature higher than the first temperature, and the rigid/insulating portion may have a melting point of a third temperature lower than the first temperature.

The first temperature may be 500 °C to 700 °C, the heat diffusion portion may be formed of silicon with the melting point of the second temperature, and the rigid/insulating portion may be formed of polypropylene (PP) with the melting point of the third temperature.

The heat diffusion portion may further include a first side portion inside the side plate on opposite sides of the stacked battery cells in the second direction, and the rigid/insulating portion may further include a second side portion formed as a plane with a first thickness within the first side portion.

The heat diffusion portion may further include a first end portion inside the end plate on opposite sides of the stacked battery cells in the first direction, and the rigid/insulating portion may further include a second end portion formed as a plane with a second thickness greater than the first thickness within the first end portion.

The rigid/insulating portion may protrude from the second end portion out of the first end portion to form a terminal installation portion on an end plate of the pair of end plates, and the terminal installation portion may fix a final terminal to the bus bar.

The heat diffusion portion may be coupled to the first side portion between the stacked battery cells, and the rigid/insulating portion may be coupled in a plane to the second side portion between the stacked battery cells.

The rigid/insulating portion may extend between the stacked battery cells in a third direction crossing the first direction and the second direction, and may be spaced apart in the second direction to have a width in the first direction, and may include a connection portion that connects adjacent pillar portions to each other, and the heat diffusion portion may embed the pillar portions and the connection portion.

The pillar portions may be formed as a cylinder with a diameter, and the heat diffusion portion may be located on opposite sides of the pillar portions and the connection portion in the first direction to form a gap larger than the diameter between the pillar portions and a battery cell of the plurality of battery cells.

At least some of the above and other features of the invention are set out in the claims.

According to one or more embodiments of the present disclosure, a heat diffusion portion is provided between battery cells and a rigid/insulating portion is embedded in the heat diffusion portion, such that during a normal operation, the heat dissipation portion has a heat dissipation effect, and, at the time of an event, the rigid/insulating portion melts to form an air layer in the heat diffusion portion such that the battery cells may be thermally separated. Accordingly, it is possible to block thermal propagation between battery cells during an event while having heat dissipation performance during a normal operation.

### BRIEF DESCRIPTION OF THE DRAWINGS

FIG. 1 illustrates a perspective view of a rechargeable battery module according to an embodiment of the present disclosure.
FIG. 2 illustrates a front view of the rechargeable battery module of FIG. 1 provided with a cooling plate.
FIG. 3 illustrates a partial front view of the cooling plate in a state in which a side plate is removed in FIG. 2.
FIG. 4 illustrates a partial front view of a bus bar in a state in which a side plate is removed in FIG. 2.
FIG. 5 illustrates a planar cross-sectional view taken along the line V-V of FIG. 2.
FIG. 6 illustrates a partially enlarged cross-sectional view of a portion of FIG. 5.
FIG. 7 illustrates a longitudinal cross-sectional view taken along the line VII-VII of FIG. 1.
FIG. 8 illustrates a partially enlarged perspective view of a heat diffusion portion and a rigid/insulating portion of FIG. 6.
FIG. 9 illustrates an enlarged cross-sectional view illustrating a heat diffusion portion and a rigid/insulating portion disposed between battery cells in FIG. 6.
FIG. 10 illustrates a longitudinal cross-sectional view taken along the line X-X of FIG. 6.

### DESCRIPTION OF SYMBOLS

| | | | |
|---|---|---|---|
| 10: | battery cell | 11, 12: | electrode terminal |
| 20: | end plate | 30: | side plate |
| 40: | heat diffusion portion | 41: | bottom diffusion portion |
| 42: | upper diffusion portion | 50: | rigid/insulating portion |
| 51: | pillar portion | 52: | connection portion |
| 60: | cooling plate | 70: | bus bar |
| 71, 72: | final terminal | 401: | first side portion |
| 402: | first end portion | 501: | second side portion |
| 502: | second end portion | 511: | terminal installation portion |
| D: | diameter | G: | gap |
| t1: | first thickness | t2: | second thickness |
| W: | width | | |

### DETAILED DESCRIPTION

The present disclosure will be described more fully herein with reference to the accompanying drawings, in which some embodiments of the invention are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

In addition, unless explicitly described to the contrary, the word "comprise" and variations such as "comprises" or "comprising" are to be understood to imply the inclusion of stated elements but not the exclusion of any other elements.

Also, in this specification, it is to be understood that when a component is referred to as being "connected" or "coupled" to another component, it may be connected or coupled directly to the other component or connected or coupled to the other component with one or more other components intervening or interposed therebetween.

Singular forms are to include plural forms unless the context clearly indicates otherwise.

It is to be understood that, although the terms "first," "second," etc. may be used herein to describe various elements, these elements should not be limited by these terms. These terms are used to distinguish one element from another. For example, a first element could be termed a "second" element, and, similarly, a second element could be termed a "first" element, without departing from the scope of example embodiments of the inventive concept. The terms of a singular form may include plural forms unless the context clearly indicates otherwise.

In addition, terms such as "below," "lower," "above," "upper," and the like are used to describe the relationship of the configurations shown in the drawings. However, the terms are used as a relative concept and are described with reference to the direction indicated in the drawings, and are not intended to be limiting.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

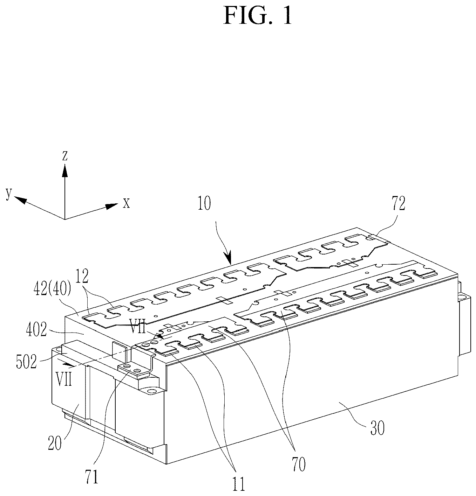

FIG. 1 illustrates a perspective view of a rechargeable battery module according to an embodiment of the present disclosure. Referring to FIG. 1, a rechargeable battery module according to an embodiment includes a plurality of battery cells 10, a pair of end plates 20, a pair of side plates 30, a heat diffusion portion 40, and a rigid/insulating portion 50.

In an embodiment, the battery cells 10 are formed in a prismatic shape and are stacked in a first direction (e.g., an x-axis direction). The pair of end plates 20 are disposed on both, or opposite, ends of the stacked battery cells 10 in the first direction to support the battery cells 10 in the x-axis direction.

The pair of side plates 30 are disposed on both, or opposite, sides of the battery cells 10 in a second direction (e.g., a y-axis direction) crossing the first direction to connect the pair of end plates 20 to each other and support the battery cells 10 in the y-axis direction.

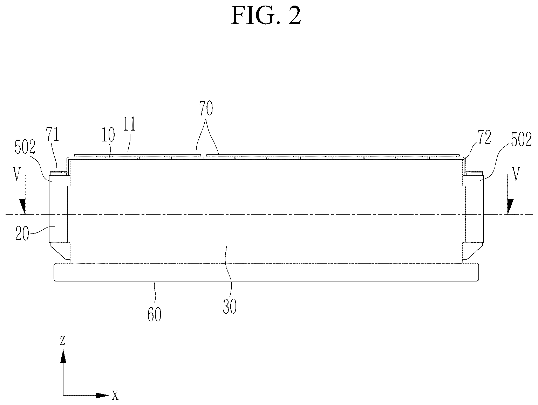

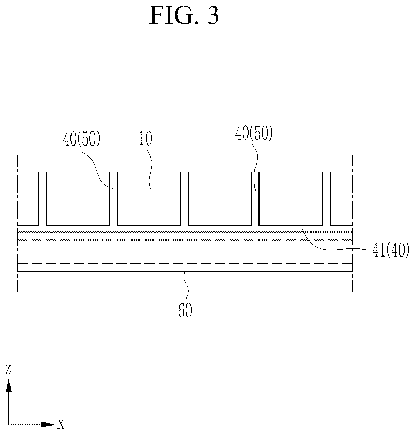

FIG. 2 illustrates a front view of the rechargeable battery module of FIG. 1 provided with a cooling plate; and FIG. 3 illustrates a partial front view of the cooling plate in a state in which a side plate is removed in FIG. 2.

Referring to FIG. 1 to FIG. 3, the rechargeable battery module according to an embodiment may further include a cooling plate 60 provided on a lower side of the battery cells 10. The cooling plate 60 may be provided on a bottom of the battery cell 10 so as not to exceed an allowable temperature (for example, 60 °C) of the battery cell 10, such as during a rapid charging, lifespan, and driving pattern of the rechargeable battery module. In an embodiment, the cooling plate 60 suppresses an increase in the temperature of the battery cells 10 based on the cooling temperature, flow amount, and flow rate of the cooling fluid.

The heat diffusion portion 40 may include a bottom diffusion portion 41 arranged on the bottom of the battery cells 10 between the battery cells 10. That is, the bottom diffusion portion 41 and the heat diffusion portion 40 may connect the lower side of the battery cell 10 and the battery cells 10 to facilitate diffusion of heat generated between the battery cells 10.

The bottom diffusion portion 41 formed at the bottom of the battery cell 10 may be in contact with the cooling plate 60. Accordingly, heat of the battery cells 10 can be easily transmitted and dissipated to the cooling plate 60 through the heat diffusion portion 40 and the bottom diffusion portion 41.

For long-distance driving of a vehicle equipped with the rechargeable battery module according to an embodiment, the rechargeable battery module has a higher capacity (for example, 182 Ah/battery cell), and the time required for rapid charging is decreased, for example, from 28 minutes to about 15 minutes.

For example, due to a demand for high capacity and rapid charging, the cooling plate 60 may be used to control the temperature at 15 °C. As a result, a temperature deviation between the bottom of the prismatic battery cell 10 and an upper end of the battery cell 10 may approach 30 °C, which may hinder performance and safety of the battery cell 10.

The maximum allowable or desirable temperature deviation between the upper end and the lower end of the battery cell 10 may be 8 °C. In an embodiment, to reach the allowable temperature deviation, the heat diffusion portion 40 and a rigid/insulating portion 50 are used. The heat diffusion portion 40 quickly performs heat transmission to stably perform heat diffusion when the battery cell 10 is normally operated.

The rigid/insulating portion may be a rigid portion, an insulating portion or a rigid insulating portion.

In this case, the rigid/insulating portion 50 is embedded in the heat diffusion portion 40 to provide rigidity to the rechargeable battery module when the battery cell 10 is normally operated. In addition, the rigid/insulating portion 50 is configured to melt in an embedded state thereof during an event of the battery cell 10, thereby forming an air layer inside the heat diffusion portion 40.

The air layer embedded in the heat diffusion portion 40 provides insulation between adjacent battery cells 10 and blocks heat diffusion between the battery cells 10. Air has a thermal conductivity of 0.02 Kcal/Mh°C, which is lower than that of glass fiber, water, glass, stainless steel, steel plate, or aluminium, providing excellent thermal diffusion blocking performance.

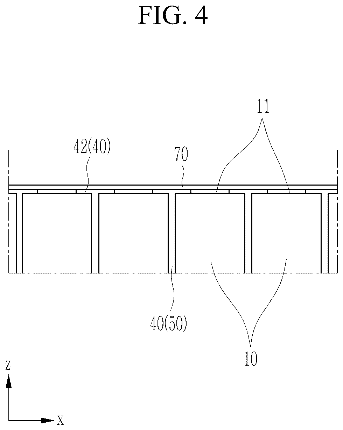

FIG. 4 illustrates a partial front view of a bus bar in a state in which a side plate is removed in FIG. 2. Referring to FIG. 1, FIG. 2, and FIG. 4, the rechargeable battery module according to an embodiment further includes a bus bar 70.

The bus bar 70 may be provided on the upper side of the battery cells 10 to electrically connect electrode terminals 11 and 12 of the battery cells 10. In an embodiment, the bus bar 70 may connect the battery cells 10 in parallel, and a plurality of bus bars 70 may connect the parallel connection again in series. Two of the bus bars 70 may be electrically connected to final terminals 71 and 72 outputting a final power of the rechargeable battery module.

The heat diffusion portion 40 may further include an upper diffusion portion 42 formed between the battery cells 10 on the upper side of the battery cells 10 excluding the electrode terminals 11 and 12. That is, the upper diffusion portion 42 and the heat diffusion portion 40 may connect the upper side of the battery cell 10 and the battery cells 10 to facilitate diffusion of heat generated between the battery cells 10 to the upper side.

The upper diffusion portion 42 formed on the upper side of the battery cell 10 may be in contact with the bus bar 70. In an embodiment, the heat diffusion portion 40, that is, the upper diffusion portion 42, may be made of a non-conductive material, such that a bus bar holder between the bus bar 70 and the electrode terminals 11 and 12 may be omitted. The removal or omission of the bus bar holder simplifies the structure of the module of the rechargeable battery.

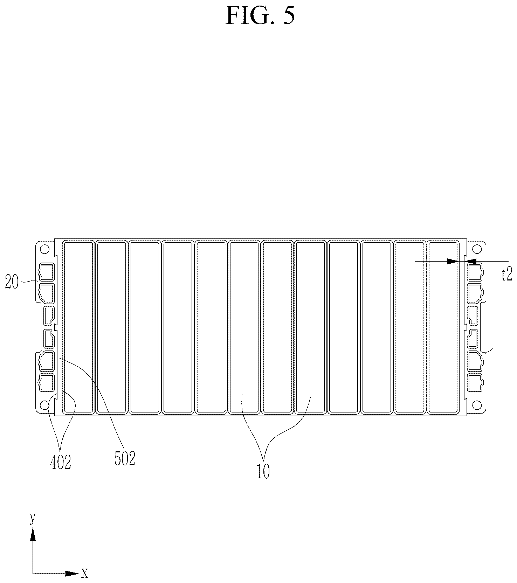

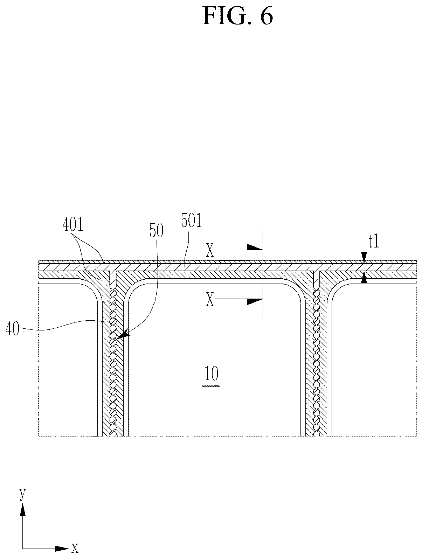

FIG. 5 illustrates a planar cross-sectional view taken along the line V-V of FIG. 2; and FIG. 6 illustrates a partially enlarged cross-sectional view of a portion of FIG. 5.

Referring to FIG. 1 to FIG. 6, the heat diffusion portion 40, the bottom diffusion portion 41, and the upper diffusion portion 42 may have a first melting point, and may be made of silicon (Si), as an example.

In an embodiment, the heat diffusion portion 40, the bottom diffusion portion 41, and the upper diffusion portion 42 of silicon (Si) may be provided on an entire outer surface of the battery cell 10, and the bottom diffusion portion 41 may be in close contact with the cooling plate 60, such that a heat diffusion effect of the battery cell 10 may be maximized or increased. In an embodiment, silicon (Si) may surround the entire outer surface of the battery cell 10, and silicon may be connected to the battery cell 10 in a nanopore bonding structure.

The rigid/insulating portion 50 is embedded in the heat diffusion portion 40, has a second melting point that is lower than the first melting point, and provides rigidity or insulation. In an embodiment, for example, the heat diffusion portion 40 may be made of silicon (Si), and the rigid/insulating portion 50 may be made of polypropylene (PP).

In an embodiment, the heat diffusion portion 40 may be made of a liquid crystal polymer (LCP) containing silicon (Si) or carbon, and the rigid/insulating portion 50 may be made of polycarbonate (PC).

The battery cell 10 forms a first temperature on the surface thereof in an event situation, such as thermal runaway. The heat diffusion portion 40 has a melting point of a second temperature (e.g a first melting point) higher than the first temperature. The rigid/insulating portion 50 has a melting point of a third temperature (e.g. a second melting point) lower than the first temperature.

For example, the first temperature of the battery cell 10 during an event may be 500 to 700 °C. The second temperature of silicon (Si) that may form the heat diffusion portion 40 may be 1414 °C (i.e. the first melting point/second temperature may be 1414 °C), and thus does not melt at the first temperature and diffuses the first temperature to the entire surface of the battery cell 10 and the entire surface of the rechargeable battery module during the event. Silicon (Si) has a melting point of 1414 °C and a thermal conductivity of 149 W/mK (about 82 % of the thermal conductivity of aluminium). In an embodiment, the melting point of the heat diffusion portion 40 may be 335 to 1414 °C.

In an embodiment, the third temperature of the rigid/insulating portion 50 (e.g. the second melting point) may be 165 °C. The rigid/insulating portion 50 may be formed of polypropylene. The melting point of polypropylene is 165 °C. The rigid/insulating portion 50 may be melted by the first temperature of the battery cell 10, thereby forming an air layer in the heat diffusion portion 40. The air layer is provided inside the heat diffusion portion 40 to block heat diffusion to the battery cells 10 adjacent thereto.

In other words, the heat of the battery cell 10 that caused the event may be blocked from diffusion to adjacent battery cells 10 by the air layer formed by melting the rigid/insulating portion 50 and may be quickly dissipated through the cooling plate 60. The polypropylene (PP) has a melting point of 165 °C and a thermal conductivity of 0.2 W/mK. In an embodiment, the melting point of the rigid/insulating portion 50 may be 145 to 165 °C.

In an embodiment, a difference in melting point between the heat diffusion portion 40 and the rigid/insulating portion 50 may be 2 to 10 times. In an embodiment, a range of the thermal conductivity of the heat diffusion portion 40 is 10 W/mK to 149 W/mk, and a range of the thermal conductivity of the rigid/insulating portion 50 is 0.2 W/mk to 0.5 W/mK. A difference in thermal conductivity between the heat diffusion portion 40 and the rigid/insulating portion 50 may be in a range from 20 times to 745 times.

In an embodiment, the heat diffusion portion 40 may further include a first side portion 401 inside the side plates 30 on both, or opposite, sides of the stacked battery cells 10 in the second direction (e.g., the y-axis direction), and the rigid/insulating portion 50 may further include a second side portion 501 formed in the first side portion 401 as a plane having a first thickness t1.

In an embodiment, the heat diffusion portion 40 and the second side portion 501 may be formed to correspond to the entire area of the side plate 30, so as to prevent or substantially prevent heat generated from the battery cells 10 from diffusing into other battery cells 10.

In an embodiment, the heat diffusion portion 40 may further include a first end portion 402 inside the end plates 20 on both, or opposite, sides of the stacked battery cells 10 in the first direction (e.g., the x-axis direction), and the rigid/insulating portion 50 further includes a second end portion 502 formed in the first end portion 402 as a plane having a second thickness t2 greater than the first thickness t1.

In an embodiment, the heat diffusion portion 40 and the second end portion 502 may be formed to correspond to the entire area of the end plate 20, so as to prevent or substantially prevent heat generated from the battery cells 10 from diffusing into the end plate 20.

In a normal operation situation, rather than a cell event situation, the first end portion 402 of the heat diffusion portion 40 and the second end portion 502 of the rigid/insulating portion 50 may be molded with the end plate 20. In an embodiment, the end plate 20 may be formed of aluminium to provide mechanical rigidity.

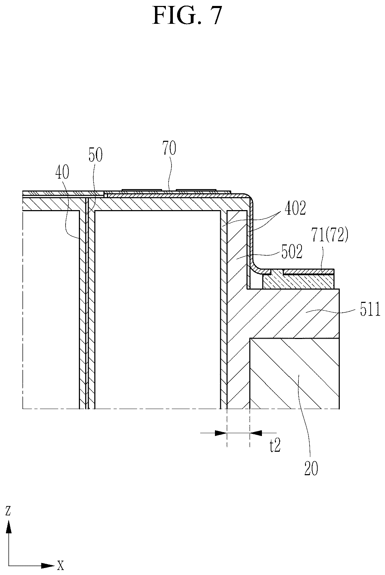

FIG. 7 illustrates a longitudinal cross-sectional view taken along the line VII-VII of FIG. 1. Referring to FIG. 1, FIG. 2, and FIG. 7, the rigid/insulating portion 50 may protrude out of the first end portion 402 from the second end portion 502 to form a terminal installation portion 511 on the end plate 20.

The terminal installation portion 511 may fix the final terminals 71 and 72 to be coupled to the bus bar 70. The terminal installation portion 511 may prevent or substantially prevent heat generated from the final terminals 71 and 72 from propagating to the bus bar 70 and the battery cell 10.

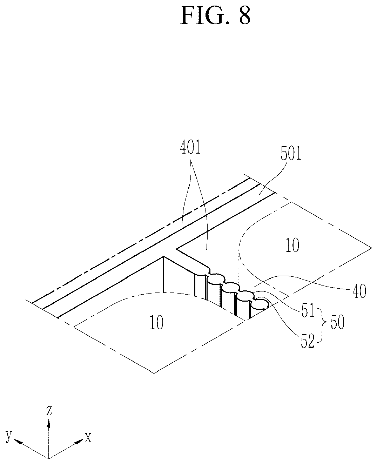

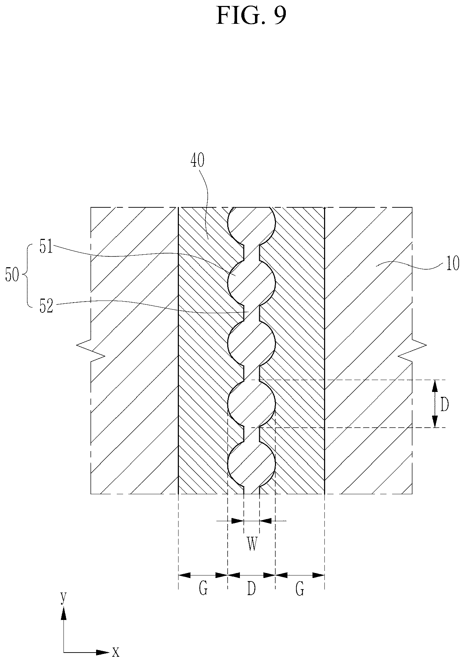

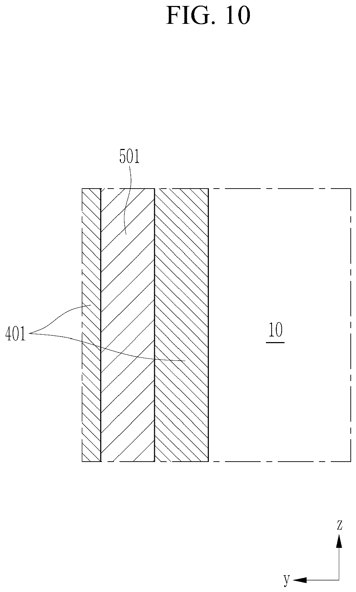

FIG. 8 illustrates a partially enlarged perspective view of a heat diffusion portion and a rigid/insulating portion of FIG. 6; FIG. 9 illustrates an enlarged cross-sectional view illustrating a heat diffusion portion and a rigid/insulating portion disposed between battery cells in FIG. 6; and FIG. 10 illustrates a longitudinal cross-sectional view taken along the line X-X of FIG. 6.

Referring to FIG. 8 to FIG. 10, the heat diffusion portion 40 may be coupled to the first side portion 401 between the stacked battery cells 10, and the rigid/insulating portion 50 may be coupled to the second side portion 501 in a plane between the stacked battery cells 10.

Accordingly, in an embodiment, the heat diffusion portion 40 including the first side portion 401 partitions and may surround each of the battery cells 10. The rigid/insulating portion 50 may include the second side portion 501 and may be embedded in the heat diffusion portion 40 that partitions and surrounds each of the battery cells 10 so as to partition and surround each of the battery cells 10 together with the heat diffusion portion 40.

In an embodiment, for example, the rigid/insulating portion 50 may include a plurality of pillar portions, or pillars, 51 and a connection portion 52 that couples neighboring pillar portions 51 to each other. The pillar portions 51 may be formed to extend between the stacked battery cells 10 along a third direction (e.g., a z-axis direction) that intersects the first direction (e.g., the x-axis direction) and the second direction (e.g., the y-axis direction) and may be spaced apart from each other along the second direction.

In an embodiment, the heat diffusion portion 40 may be located between neighboring battery cells 10 by embedding the pillar portions 51 and the connection portions 52. When the pillar portions 51 are melted, a sufficient air layer is formed within the heat diffusion portion 40. The connection portion 52 enables connection of the air layer in the entire outer surface area of the battery cell 10 when melted without reducing the rigidity of the heat diffusion portion 40.

In an embodiment, the pillar portions 51 may be formed as cylinders having a diameter D, and the heat diffusion portion 40 may be provided on both, or opposite, sides of the pillar portions 51 and the connection portions 52 in the first direction (e.g., the x-axis direction) to form a gap G larger than the diameter D between the pillar portion 51 and the battery cell 10.

The diameter D may have a size that may form a sufficient air layer while securing the gap G when melted, and the connection portion 52 prevents or substantially prevents a decrease in rigidity of the heat diffusion portion 40 between the battery cells 10 when not melted.

In an embodiment, for example, the diameter D of the pillar portion 51 may be 1 to 3 mm, but may be adjusted depending on the capacity of the battery cell 10. In an embodiment, a width W of the connection portion 52 may be 0.2 to 0.6 mm. In an embodiment, the width W may be 20% to 50% of the diameter D (W=(0.2-0.5)D).

A ratio of the width W to the diameter D may be selectively applied according to the number of the battery cells 10 in the rechargeable battery module, the length of the rechargeable battery module (e.g., in the x-axis direction), and the weight of the battery cells 10 with respect to the entire rechargeable battery module.

In the present embodiment, the pillar portion 51 is illustrated as a cylinder; however, the pillar portion 51 may be formed as any of a square pillar, a rhombus-shaped pillar, a regular octagonal pillar, a regular dodecagonal pillar, and a star pillar, for example. Depending on the shape of the pillar portion 51, the integrity of the pillar portion 51 and the heat diffusion portion 40 may be strengthened.

While the present disclosure has been described in connection with what are presently considered to be some practical embodiments, it is to be understood that the disclosure is not limited to the disclosed embodiments, but, on the contrary, is intended to cover various modifications and equivalent arrangements included within the scope of the appended claims.

## Claims

1. A rechargeable battery module comprising:
a plurality of battery cells stacked in a first direction;
a pair of end plates located at opposite ends of the plurality of battery cells in the first direction;
a pair of side plates at opposite sides of the plurality of battery cells in a second direction crossing the first direction to connect the pair of end plates to each other;
a heat diffusion portion located between battery cells of the plurality of battery cells and having a first melting point; and
a rigid/insulating portion embedded inside the heat diffusion portion to provide rigidity or insulation and having a second melting point lower than the first melting point.

2. The rechargeable battery module as claimed in claim 1, further comprising a cooling plate below the battery cells.

3. The rechargeable battery module as claimed in claim 2, wherein
the heat diffusion portion comprises a bottom diffusion portion at a bottom of the battery cells between the battery cells, and
the bottom diffusion portion is in contact with the cooling plate.

4. The rechargeable battery module as claimed in any one of claims 1 to 3, further comprising a bus bar on an upper side of the battery cells to electrically connect electrode terminals of the battery cells.

5. The rechargeable battery module as claimed in claim 4, wherein
the heat diffusion portion comprises an upper diffusion portion between the battery cells on the upper side of the battery cells excluding the electrode terminals, and
the upper diffusion portion is in contact with the bus bar.

6. The rechargeable battery module as claimed in any one of claims 1 to 5, wherein the heat diffusion portion is formed of silicon (Si) or liquid crystal polymer (LCP).

7. The rechargeable battery module as claimed in claim 6, wherein the rigid/insulating portion is formed of polypropylene (PP) or polycarbonate (PC).

8. The rechargeable battery module as claimed in any one of claims 1 to 7, wherein the heat diffusion portion exists in a solid state at room temperature, and has a higher density in a liquid state than in a solid state and has a larger volume when solidified like water.

9. The rechargeable battery module as claimed in any one of claims 1 to 8, wherein
the battery cells are configured to form a first temperature on a surface thereof in an event situation,
the heat diffusion portion has a melting point of a second temperature higher than the first temperature, and
the rigid/insulating portion has a melting point of a third temperature lower than the first temperature.

10. The rechargeable battery module as claimed in claim 9, wherein
the first temperature is 500 °C to 700 °C,
the heat diffusion portion is formed of silicon with the melting point of the second temperature, and
the rigid/insulating portion is formed of polypropylene (PP) with the melting point of the third temperature.

11. The rechargeable battery module as claimed in any one of claims 1 to 10, wherein
the heat diffusion portion comprises a first side portion inside the side plates on opposite sides of the stacked battery cells in the second direction, and
the rigid/insulating portion comprises a second side portion formed as a plane with a first thickness within the first side portion.

12. The rechargeable battery module as claimed in claim 11, wherein
the heat diffusion portion further comprises a first end portion inside the end plates on opposite sides of the stacked battery cells in the first direction, and
the rigid/insulating portion further comprises a second end portion formed as a plane with a second thickness greater than the first thickness within the first end portion.

13. The rechargeable battery module as claimed in claim 12, wherein
the rigid/insulating portion protrudes from the second end portion out of the first end portion to form a terminal installation portion on an end plate of the pair of end plates, and
the terminal installation portion fixes a final terminal to the bus bar.

14. The rechargeable battery module as claimed in claim 11, wherein
the heat diffusion portion is coupled to the first side portion between the stacked battery cells, and
the rigid/insulating portion is coupled in a plane to the second side portion between the stacked battery cells.

15. The rechargeable battery module as claimed in any one of claims 1 to 14, wherein
the rigid/insulating portion extends between the stacked battery cells in a third direction crossing the first direction and the second direction, and is spaced apart in the second direction to have a width in the first direction, and comprises a connection portion that connects adjacent pillar portions to each other, and
the heat diffusion portion embeds the pillar portions and the connection portion, optionally wherein
the pillar portions are formed as a cylinder with a diameter, and
the heat diffusion portion is located on opposite sides of the pillar portions and the connection portion in the first direction to form a gap larger than the diameter between the pillar portion and a battery cell of the plurality of battery cells.
